# EUROPÄISCHE PATENTSCHRIFT

(11) **EP 4 212 829 B1**
(45) Veröffentlichungstag und Bekanntmachung des Hinweises auf die Patenterteilung: **30.09.2026**
(21) Anmeldenummer: 23150087.7
(22) Anmeldetag: 03.01.2023
(51) Int. Cl.: G01F 1/663, G01F 1/667

(54) **VERFAHREN UND MESSEINRICHTUNG ZUR ERMITTLUNG EINER EINEN DURCHFLUSS BETREFFENDEN MESSGRÖSSE**
METHOD AND MEASURING DEVICE FOR DETERMINING A MEASUREMENT VARIABLE RELATING TO A FLOW
PROCÉDÉ ET DISPOSITIF DE MESURE POUR DÉTERMINER UNE GRANDEUR DE MESURE CONCERNANT UN DÉBIT

(30) Priorität: 12.01.2022 DE 102022100677
(43) Veröffentlichungstag der Anmeldung: 19.07.2023
(73) Patentinhaber: Diehl Metering GmbH, 91522 Ansbach (DE)
(72) Erfinder: Benkert, Andreas, 91522 Ansbach (DE); Horn, Roland, 91629 Weihenzell (DE); Wetzel, Marcus, 91560 Heilsbronn (DE); Madinger, Andreas, 91522 Ansbach (DE); Mayle, Michael, 91522 Ansbach (DE)
(74) Vertreter: Diehl Patentabteilung

(56) Entgegenhaltungen:
- EP-A1- 0 312 224
- DE-A1- 19 815 199
- RU-U1- 171 822

## Beschreibung

Die Erfindung betrifft ein Verfahren zur Ermittlung einer den Durchfluss eines Fluids durch ein Messrohr betreffenden Messgröße durch eine Messeinrichtung, wobei für zwei Ausbreitungsrichtungen jeweils durch einen sendenden Ultraschallwandler der Messeinrichtung ein Ultraschallsignal abgestrahlt und über das Fluid zu einem empfangenden Ultraschallwandler der Messeinrichtung übertragen wird, wobei über den jeweiligen empfangenden Ultraschallwandler ein Empfangssignal für die jeweilige Ausbreitungsrichtung erfasst wird, wobei in Abhängigkeit der Lage des Hauptmaximums einer Kreuzkorrelation der Empfangssignale für die zwei Ausbreitungsrichtungen oder einer Kreuzkorrelation von Verarbeitungssignalen, die jeweils von einem der Empfangssignale oder von einem Teilsignal des jeweiligen Empfangssignals abhängen, ein Laufzeitunterschied zwischen den Laufzeiten des jeweiligen Ultraschallsignals für die jeweilige Ausbreitungsrichtung von dem jeweiligen sendenden Ultraschallwandler zu dem jeweiligen empfangenden Ultraschallwandler ermittelt wird, wonach die Messgröße in Abhängigkeit des Laufzeitunterschieds ermittelt wird, wobei der sendende Ultraschallwandler jeweils mit einem Anregungssignal angesteuert wird. Daneben betrifft die Erfindung eine Messeinrichtung.

Es ist wohlbekannt, bei ultraschallbasierten Durchflussmessungen eine jeweilige Laufzeit von einem sendenden zu einem empfangenden Ultraschallwandler in Strömungsrichtung und in entgegen der Strömungsrichtung zu erfassen und aus dem Laufzeitunterschied zwischen diesen Laufzeiten die Strömungsgeschwindigkeit bzw. bei bekannter Strömungsgeometrie den Volumenfluss zu ermitteln. Ein üblicher Ansatz zur Ermittlung der jeweiligen Laufzeit ist es hierbei, eine Einhüllende des empfangenden Ultraschallsignals zu ermitteln, beispielsweise durch Gleichrichtung und Tiefpassfilterung, und mithilfe eines Komparators den Beginn der einlaufenden Welle zu erkennen. Prinzipbedingt werden hierdurch jedoch recht geringe Zeitauflösungen erreicht, da die Phasenlage des Empfangssignals nicht berücksichtigt wird. Somit sind relativ lange Messstrecken erforderlich, um eine hohe Genauigkeit zu erreichen.

Zur Verbesserung der Zeitauflösung schlägt die Druckschrift DE 10 2009 046 562 A1 vor, für beide Übertragungsrichtungen jeweils einen Sendepuls mit sich ändernder Trägerfrequenz zu nutzen. Werden nun die Frequenzänderungsverläufe der empfangenen Signale ermittelt und für die beiden Ausbreitungsrichtungen miteinander korreliert, kann hierdurch ein Laufzeitunterschied mit guter Zeitauflösung ermittelt werden.

Bei diesem Vorgehen ist es jedoch nachteilig, dass eine Anregung mit veränderlicher Anregungsfrequenz technisch relativ aufwändig ist und zudem zumindest für einen Teil des Anregungsintervalls eine Anregung mit einer von der Resonanzfrequenz unterschiedlichen Frequenz erfolgen muss, wodurch zum Erreichen gleicher Anregungsamplituden ein höherer Energieaufwand erforderlich ist. Zudem ist eine Anregung mit zeitlich veränderlicher Trägerfrequenz nicht für alle Messeinrichtungen geeignet. Soll beispielsweise eine indirekte Anregung des Fluids erfolgen, indem zunächst eine Lamb-Welle in einer Rohrwand angeregt wird, die wiederum Kompressionswellen im Fluid anregt, führen unterschiedliche Anregungsfrequenzen zu unterschiedlichen Rayleigh-Winkeln und somit zu unterschiedlichen Ausbreitungspfaden der Kompressionswelle im Fluid, weshalb es nicht oder zumindest nicht ohne weiteres möglich ist, aus hierbei resultierenden Empfangssignalen einen Durchfluss zu ermitteln.

Die EP 0 312 224 A1 offenbart eine Durchflussmessung, bei der Messsignale sowohl mit und entgegen dem Durchfluss zwischen Ultraschallwandler übertragen werden. Es wird zunächst für jede Messrichtung eine Kreuzkorrelation zwischen dem Sendesignals und dem Empfangssignal ermittelt, wonach die resultierenden Korrelationssignale für beide Messrichtungen wiederum kreuzkorreliert werden, um einen Laufzeitunterschied zu ermitteln.

Der Erfindung liegt somit die Aufgabe zugrunde, eine Möglichkeit anzugeben, einen Laufzeitunterschied, der zur Ermittlung einer den Durchfluss eines Fluid betreffenden Messgröße genutzt wird, mit hoher Zeitauflösung zu ermitteln, wobei die obig erläuterten Probleme, die aus einer Änderung der Trägerfrequenz innerhalb des Anregungspulses resultieren, zumindest weitgehend vermieden werden sollen.

Die Aufgabe wird erfindungsgemäß durch ein Verfahren der eingangs genannten Art gelöst, wobei einerseits das Anregungssignal eine feste Trägerfrequenz aufweist, wobei das Anregungssignal eine Einhüllende mit mehreren zeitlich beabstandeten Maxima aufweist, und wobei andererseits bei Erfüllung einer Auslösebedingung, deren Erfüllung von der Höhe wenigstens eines Nebenmaximums der Kreuzkorrelation abhängt, die Ermittlung der Messgröße gegenüber einem Normalbetriebsmodus modifiziert und/oder eine Nachricht an einen Nutzer der Messeinrichtung und/oder eine messeinrichtungsexterne weitere Einrichtung ausgegeben wird.

Das vorgeschlagene Vorgehen ermöglicht es, auch ohne Änderung der Trägerfrequenz des Anregungssignals den Laufzeitunterschied robust und mit hoher Auflösung zu ermitteln, womit auch die Messgröße robust und mit guter Genauigkeit ermittelt werden kann. Prinzipiell berücksichtigt die Kreuzkorrelation bereits die Phasenlage der Empfangssignale, wodurch eine hohe Zeitauflösung für den Laufzeitunterschied resultiert. Würde das Anregungssignal dauerhaft als periodisches Signal abgestrahlt, könnte der Laufzeitunterschied jedoch nicht eindeutig ermittelt werden, da mehrere gleich hohe Maxima im Abstand der Periode des Anregungssignals auftreten würden. Die Nutzung einer endlich langen Anregung bzw. somit auch einer zeitlich veränderlichen Einhüllenden führt jedoch bereits dazu, dass bei störungsfreien bzw. hinreichend störungsarmen Messungen ein klares Hauptmaximum der Kreuzkorrelation resultiert und die Nebenmaxima eine merklich geringere Höhe als das Hauptmaximum aufweisen, womit ein eindeutiger Laufzeitunterschied bestimmbar ist.

Problematisch ist hierbei jedoch, dass bei üblichen Anregungssignalen, die beispielsweise zehn Schwingungsperioden innerhalb einer rechteckigen Einhüllenden umfassen, sich die Höhen des Haupt- und der benachbarten Nebenmaxima nur relativ geringfügig unterscheiden. Da zudem Ultraschallsignale relativ hochfrequent sind, beispielsweise eine Anregungsfrequenz von 1 MHz aufweisen, und somit bei üblicherweise genutzten Sampleraten von beispielsweise 8 MHz zur Digitalisierung der Empfangssignale pro Schwingungszyklus nur eine relativ kleine Zahl von Messpunkten erfasst wird, resultieren in realen Anwendungen häufig sogar noch geringere Unterschiede zwischen der Höhe des Hauptmaximums und der Nebenmaxima, so dass bereits relativ kleine Störungen dazu führen können, dass eine Fehlerkennung eines der Nebenmaxima als Hauptmaximum resultiert. Dies führt jedoch zu einem sehr großen Messfehler für die ermittelte Messgröße und muss daher vermieden werden, um eine hinreichende Robustheit der Messgrößenerfassung zu erreichen.

Im Rahmen der Erfindung wurde erkannt, dass die Nutzung eines Phasensprungs im Anregungssignal oder auch die Nutzung einer Einhüllenden mit mehreren zeitlich beabstandeten Maxima die relativen Höhen der Nebenmaxima der Kreuzkorrelation im Vergleich mit der Höhe des Hauptmaximums deutlich absenkt, so dass eine Erkennung des Hauptmaximums und somit eine Bestimmung des Laufzeitunterschieds erheblich robuster möglich ist. Dies resultiert daraus, dass in beiden Fällen eine Verschiebung eines Empfangssignals um eine Periode bezüglich des anderen Empfangssignals, die zum ersten Nebenmaximum führt, das Integral über das Produkt der derart zueinander verschobene Empfangssignale bereits deutlich reduziert. Der Phasensprung des Anregungssignals führt nämlich zu einem Phasensprung in den Empfangssignalen, so dass diese nach einer solchen Verschiebung bereichsweise nicht mehr phasensynchron überlappen. Auch eine Verschiebung der Maxima der Einhüllenden der Empfangssignale, die aus der Wahl der beschriebenen Einhüllenden für das Anregungssignal resultieren, gegeneinander führt zu einer Absenkung der Höhe der Nebenmaxima. Hierdurch ist die Messung insgesamt erheblich weniger störanfällig.

Prinzipiell ist es jedoch auch möglich, nicht gemäß dem Wortlaut der Ansprüche, auch ohne einen solchen Phasensprung des Anregungssignals bzw. bei Nutzung einer Einhüllenden mit nur einem Maximum durch Nutzung der Auslösebedingung entsprechende Störungen der Messung, die ansonsten zu Fehlern der Messgröße führen würden, zu erkennen und beispielsweise bei Erfüllung der Auslösebedingung die Messung zu verwerfen bzw. die Ermittlung der Messgröße zu modifizieren, wie später noch genauer erläutert werden wird. Die Auswertung der Auslösebedingung kann jedoch, insbesondere dann, wenn ein Phasensprung bzw. eine Einhüllende mit mehreren zeitlich beabstandeten Maxima genutzt wird, auch zu anderen Zwecken genutzt werden, beispielsweise zur weiteren Verbesserung der Messgenauigkeit, zur Erkennung von Alterungsprozessen und Ähnlichem. Die Prüfung der Auslösebedingung ist auch zweckmäßig, um im Rahmen der Herstellung und/oder nach der Installation der Messeinrichtung eine Qualitätskontrolle durchzuführen und z.B. bei Erfüllung der Auslösebedingung eine Nachricht auszugeben, dass die Messeinrichtung bzw. deren Installation vorgegebenen Qualitätsanforderungen nicht genügt.

Das Hauptmaximum ist das globale Maximum der Kreuzkorrelation, während es sich bei den Nebenmaxima nur um lokale Maxima handelt. Bei einer Störung der Messung können, z.B. aufgrund von Rauschen und/oder einer begrenzten zeitlichen Auflösung der Erfassung der Empfangssignale, jedoch Empfangssignale resultieren für deren Kreuzkorrelation die Höhe eines lokalen Maximums, das bei ungestörter Messung ein Nebenmaximum wäre, die Höhe jenes lokalen Maximums, das bei ungestörter Messung das Hauptmaximums wäre, übersteigt. Dies wird vorliegend verkürzt auch als Fehlerkennung des Hauptmaximums bzw. von dessen Lage bezeichnet. Durch das beschriebene Vorgehen sollen entsprechende Störungen unterdrückt oder zumindest erkannt werden.

In dem erfindungsgemäßen Verfahren kann insbesondere jener Ultraschallwandler, der für die erstes Ausbreitungsrichtung als sendender Ultraschallwandler genutzt wird, für die zweite Ausbreitungsrichtung als empfangender Ultraschallwandler genutzt werden und/oder der Ultraschallwandler, der für die erste Ausbreitungsrichtung als empfangender Ultraschallwandler genutzt wird, kann für die zweite Ausbreitungsrichtung als sendender Ultraschallwandler genutzt werden. Das erfindungsgemäße Verfahren kann somit mit genau zwei Ultraschallwandlern durchgeführt werden, die jeweils für eine der Ausbreitungsrichtungen als sendender Ultraschallwandler und für die andere Ausbreitungsrichtung als empfangender Ultraschallwandler verwendet werden.

Alternativ ist es jedoch auch möglich, für die Abstrahlung des Ultraschallsignals und/oder für den Empfang des Empfangssignals für die zweite Ausbreitungsrichtung einen Ultraschallwandler zu nutzen, der im Rahmen der Messung für die erste Ausbreitungsrichtung nicht verwendet wird. Beispielsweise kann für die erste Ausbreitungsrichtung und die zweite Ausbreitungsrichtung der gleiche Ultraschallwandler zum Senden des jeweiligen Ultraschallsignals genutzt werden, wobei beispielsweise für die erste Ausbreitungsrichtung ein stromaufwärts von diesem Ultraschallwandler liegender weiterer Ultraschallwandler als empfangender Ultraschallwandler genutzt wird und für die zweite Ausbreitungsrichtung ein stromabwärts dieses Ultraschallwandlers angeordneter weiterer Ultraschallwandler.

Die Ultraschallwandler können in bzw. an dem Messrohr angeordnet sein und das Fluid entweder direkt oder indirekt anregen. Eine indirekte Anregung kann beispielsweise dadurch erfolgen, dass zunächst eine geführte Welle, beispielsweise eine Lamb-Welle, in der Messrohrwand angeregt wird, die entlang ihres Ausbreitungspfades Kompressionswellen im Fluid anregt. Entsprechend kann auch der Empfang entweder direkt durch den empfangenden Ultraschallwandler oder indirekt, beispielsweise über eine Rohrwand, erfolgen.

Als Messgröße können insbesondere eine Durchflussgeschwindigkeit des Fluids und/oder ein Volumenfluss ermittelt werden.

Wird eine Kreuzkorrelation von Verarbeitungssignalen verwendet, so kann das jeweilige Verarbeitungssignal oder ein Zwischensignal, aus dem das Verarbeitungssignal ermittelt wird, beispielsweise dadurch erzeugt bzw. ausgewählt werden, dass ausschließlich Teile der Messwerte des jeweiligen Empfangssignals berücksichtigt werden, beispielsweise nur jene Messwerte, die während eines bestimmten Teilintervalls des Zeitintervalls, während dem das Empfangssignal erfasst wurde, erfasst wurden. Durch Einschränkung auf ein Teilsignal kann insbesondere der Rechenaufwand und somit der Energiebedarf zur Berechnung der Kreuzkorrelation reduziert werden. Ergänzend oder alternativ kann im Rahmen der Ermittlung des jeweiligen Verarbeitungssignals z.B. ein Upsampling, eine Interpolation, eine Filterung und/oder eine Skalierung erfolgen.

In nicht unter den Wortlaut der Ansprüche fallenden Fällen, in denen eine Einhüllende ohne mehrere zeitlich beabstandete Maxima verwendet wird, kann die Einhüllende im einfachsten Fall eine Rechteckfunktion sein, das heißt zum An- und Ausschalten des Anregungssignals dienen. Insbesondere dann, wenn eine Einhüllende mit mehreren zeitlich beabstandeten Maxima genutzt werden soll, können jedoch auch komplex geformte Einhüllende, beispielsweise Pulsfolgen oder Einhüllende, die abschnittsweise unterschiedliche Steigungen aufweisen, genutzt werden.

Unabhängig davon, ob eine Einhüllende mit mehreren zeitlich beabstandeten Maxima genutzt wird, kann der Amplitudenverlauf des Anregungssignals beispielsweise dadurch vorgegeben werden, dass das Anregungssignal zunächst mit fester Amplitude vorgegeben bzw. generiert wird und anschließend eine Amplitudenmodulation durch eine separat vorgegebene Einhüllende erfolgt. Alternativ kann jedoch beispielsweise unmittelbar ein Anregungssignal dem gewünschten Amplitudenverlauf bzw. mit der gewünschten Einhüllenden generiert bzw. vorgegeben werden.

Das Anregungssignal kann insbesondere die Resonanzfrequenz des sendenden und/oder des empfangenden Ultraschallwandlers aufweisen. Es können jedoch auch andere Anregungsfrequenzen genutzt werden. Beispielsweise kann die Trägerfrequenz so gewählt sein, dass bei gegebener Amplitude der Anregung die maximale Amplitude des Empfangssignals resultiert. Wie später noch erläutert werden wird, kann die Wahl der Trägerfrequenz jedoch auch dazu dienen, die Größe von Phasensprüngen im Empfangssignal zu maximieren.

Die Auswertung der Auslösebedingung kann dazu dienen, Verzerrungen eines der Empfangssignale zu erkennen, wobei solche Verzerrungen insbesondere zu einer Reduzierung der Höhe des Hauptmaximums führen, da in diesem Fall die Empfangssignale deutlich voneinander abweichende Formen aufweisen. Solche Verzerrungen können beispielsweise daraus resultieren, dass einer der Ultraschallwandler oder die zugeordnete Elektronik beschädigt ist, bzw. dass eine Fehlabstimmung der Komponenten aufeinander vorliegt. Verzerrungen können auch aus gestörten Schallübertragungspfaden resultieren, beispielsweise wenn die Ultraschallwandler nicht korrekt mit dem Messrohr oder anderen Komponenten gekoppelt sind oder sich im Messrohr Luft, Partikel oder Ähnliches befinden. Auch ein Mangel der elektromagnetischen Verträglichkeit von Komponenten der Messeinrichtung oder von im Umfeld der Messeinrichtung angeordneten Komponenten, beispielsweise aufgrund von Manipulationsversuchen an einem Durchflusszähler, kann zu entsprechenden Verzerrungen bzw. einer Absenkung der Höhe des Hauptmaximums führen.

Während die beschriebenen Vorgänge typischerweise zu einer deutlichen Reduzierung der Höhe des Hauptmaximums führen und beispielsweise einen Hinweis auf eine erforderliche Wartung auslösen sollten bzw. dazu führen sollten, dass die aktuelle Messung verworfen wird, führen auch hohe Durchflussraten im Messrohr üblicherweise zu einer Absenkung der Höhe des Hauptmaximums, so dass die Höhe des Hauptmaximums bzw. die Auslösebedingung auch ausgewertet werden kann, um beispielsweise Anpassungen des Messbetriebs bzw. Korrekturen bei hohen Flussraten durchzuführen.

Die Höhe des Nebenmaximums, insbesondere verglichen mit der Höhe des Hauptmaximums, kann insbesondere ausgewertet werden, um zu beurteilen, wie robust bei der aktuellen Messung das Hauptmaximum erkannt wurde. Somit kann eine potentielle Fehlerkennung des Hauptmaximums erkannt werden und beispielsweise die Messung bedarfsgerecht wiederholt werden.

Bei Erfüllung der Auslösebedingung kann die Ermittlung der Messgröße gegenüber dem Normalbetriebsmodus derart modifiziert werden, dass einerseits die Empfangssignale verworfen werden und entweder eine vorangehend ermittelte Messgröße als aktuelle Messgröße verwendet wird oder die Ermittlung der Empfangssignale zur Bereitstellung neuer Empfangssignale wiederholt wird, wobei die Ermittlung der neuen Empfangssignale gegenüber der Ermittlung der Empfangssignale entweder unverändert oder mit wenigstens einem geänderten Ermittlungsparameter erfolgt, und die Messgröße auf Basis der neuen Empfangssignale ermittelt wird, und/oder dass andererseits der Laufzeitunterschied in Abhängigkeit der Lage eines der Nebenmaxima der Kreuzkorrelation ermittelt wird und/oder eine Ermittlungsvorschrift zur Ermittlung der Messgröße aus dem Laufzeitunterschied modifiziert wird.

Wie bereits obig erläutert wurde, kann die Auslösebedingung aufgrund von Störungen oder Manipulationen erfüllt sein, was beispielsweise durch das Vorliegen sehr ähnlicher Höhen von Hauptmaximum und wenigstens einem Nebenmaximum und/oder einer deutlich reduzierten Höhe des Hauptmaximums erkannt werden kann. In diesem Fall ist es zweckmäßig, die Messung zu verwerfen. Je nach Zeittaktung der Messung im üblichen Betrieb kann hierbei eine hinreichende Zeitreserve vorhanden sein, um die Messungen zu wiederholen.

Es kann ausreichend sein, die Ermittlung der Empfangssignale unverändert zu wiederholen, z.B. wenn die Auslösebedingung aufgrund einer kurzfristigen Störung erfüllt wurde. Andererseits kann es vorteilhaft sein Ermittlungsparameter bei der Wiederholung zu verändern, um auch auf eine Erfüllung der Auslösebedingung aufgrund von länger anhaltenden Störungen bzw. Änderungen der Messbedingungen reagieren zu können. Beispielsweise können die Trägerfrequenz des Anregungssignals und/oder die Größe des Phasensprungs als Erfassungsparameter modifiziert werden, worauf später noch eingegangen wird. Es ist jedoch auch möglich, die Einhüllende zu verändern, beispielsweise den Zeitabstand der Maxima und/oder die Maximalamplitude, und/oder eine Empfindlichkeit der Erfassung der Empfangssignale anzupassen.

In anderen Fällen, beispielsweise, wenn ohnehin in relativ kurzem Zeitabstand Messungen durchgeführt werden und keine allzu starken Schwankungen der Messgröße zu erwarten sind, kann statt einer neu ermittelten Messgröße auch die bislang ermittelte Messgröße weiterverwendet werden, was beispielsweise zweckmäßig sein kann, wenn ein als Messgröße ermittelter Volumenfluss über die Zeit integriert werden soll oder Ähnliches.

Wie ebenfalls bereits obig angesprochen wurde, kann jedoch auch eine hohe Durchflussgeschwindigkeit des Fluids durch das Messrohr zur Erfüllung der Auslösebedingung führen. Dies kann beispielsweise dadurch erkannt werden, dass eine relativ gleichmäßige Absenkung der Höhe von Haupt- und Nebenmaxima resultiert. In diesem Fall kann es zweckmäßig sein, die Ermittlungsvorschrift zur Ermittlung der Messgröße aus dem Laufzeitunterschied anzupassen, beispielsweise, wenn aufgrund einer bekannten Strömungsgeometrie im Messrohr angenommen werden kann, dass aufgrund einer Veränderung des Strömungsprofils bei hohen Durchflüssen ein anderer Zusammenhang zwischen dem Laufzeitunterschied, der typischerweise primär aus der Strömungsgeschwindigkeit in einem bestimmten Bereich des Messrohrs resultiert, und der Durchflussmenge besteht. Beispielsweise kann je nachdem, ob die Auslösebedingung erfüllt ist oder nicht, ein anderer Skalierungsfaktor genutzt werden bzw. eine andere Look-up-Tabelle, ein anderer mathematischer Zusammenhang oder Ähnliches.

Ein Sonderfall ist es hierbei, wenn das Hauptmaximum und wenigstens ein Nebenmaximum relativ ähnliche Höhen aufweisen, also beispielsweise ein Höhenunterschied oder Quotient einen Grenzwert unterschreitet. Beispielsweise ist es möglich, dass die Absenkung des Hauptmaximums für einen hohen Durchfluss spricht und zugleich die aus der Lage des Hauptmaximums ermittelte Laufzeit für einen niedrigen Durchfluss. In diesem Fall kann es zweckmäßig sein, statt der Lage des Hauptmaximums, das voraussichtlich auf Basis einer Fehlerkennung erkannt wurde, ein Nebenmaximum zur Ermittlung des Laufzeitunterschieds heranzuziehen, bei dem es sich voraussichtlich um das tatsächliche Hauptmaximum handelt und das nur aufgrund einer Störung als Nebenmaximum erkannt wurde.

Bei Erfüllung der Auslösebedingung und/oder bei Erfüllung einer Spektralbedingung, die von einer spektralen Zusammensetzung wenigstens eines der Empfangssignale abhängt, kann nach einer ersten Ermittlung der Empfangssignale eine zweite Ermittlung der Empfangssignale erfolgen, wobei die Trägerfrequenz des Anregungssignals und/oder die Größe des Phasensprungs gegenüber der ersten Ermittlung verändert wird. Insbesondere kann der Laufzeitunterschied dann in Abhängigkeit der Messdaten der zweiten Ermittlung bestimmt werden. Es ist jedoch auch möglich, die Prüfung der Auslösebedingung beziehungsweise der Spektralbedingung so lange für die jeweils aktuellen Messdaten fortzusetzen, bis die jeweilige Bedingung nicht mehr erfüllt ist beziehungsweise eine Abbruchbedingung, beispielsweise eine maximale Anzahl von Versuchen, erfüllt ist und anschließend z.B. die zuletzt ermittelten Empfangssignale zur Ermittlung des Laufzeitunterschieds heranzuziehen.

Aufgrund einer Alterung oder Beschädigung von Komponenten der Messeinrichtung beziehungsweise aufgrund von Umgebungsbedingungen, beispielsweise der Temperatur, kann sich die Resonanzfrequenz eines der Ultraschallwandler oder beider Ultraschallwandler verschieben und/oder eine Transferfunktion für einen gesamten Übertragungspfad zwischen den Ultraschallwandlern kann sich ändern. Hierdurch können sich auch die optimalen Messbedingungen ändern, was durch Prüfung der Auslösebedingung beziehungsweise der Spektralbedingung erkannt werden kann. Durch Anpassung der Trägerfrequenz beziehungsweise der Größe des Phasensprungs können anschließend die optimalen Messbedingungen wieder hergestellt werden.

In einem einfachen Beispiel kann eine Anregung bei der Resonanzfrequenz gewünscht sein, um bei gegebener Amplitude der Anregung eine maximale Amplitude des Empfangssignals zu erreichen. Verschiebt sich nun beispielsweise die Resonanzfrequenz eines Ultraschallwandlers beziehungsweise ändert sich die Transferfunktion, kann dies zu einer reduzierten Amplitude der Empfangssignale führen, die, falls keine Normalisierung der Empfangssignale bzw. der Kreuzkorrelation erfolgt, auch die Höhe der Haupt- und Nebenmaxima der Kreuzkorrelation senkt. Dies kann durch die Auslösebedingung erkannt werden und somit kann das zu nutzende Anregungssignal neu bestimmt werden, insbesondere eine entsprechende Trägerfrequenz gewählt werden, um wiederum die maximale Amplitude zu erreichen.

Durch die Auswertung der spektralen Zusammensetzung im Rahmen der Spektralbedingung kann beispielsweise erkannt werden, wenn die Anregung der Ultraschallsignale auf einer Frequenz erfolgt, die nicht der Resonanzfrequenz des sendenden beziehungsweise des empfangenden Ultraschallwandlers entspricht. Wie beispielsweise bereits in der eingangs zitierten Druckschrift DE 10 2009 046 562 A1 erläutert wird, resultiert in diesem Fall eine Überlagerung der Anregungsfrequenz und der Resonanzfrequenz, die in der spektralen Zusammensetzung leicht erkannt werden kann.

Die Erfüllung der Spektralbedingung kann beispielsweise davon abhängen, Frequenzen welches Frequenzbereichs in dem jeweiligen Empfangssignal oder in einem ausgewählten Zeitabschnitt des jeweiligen Empfangssignals die maximale Amplitude aufweisen. Treten z. B. in der Ausschwingphase des Empfangssignals dominante Frequenzen auf, die nicht der Anregungs- bzw. Trägerfrequenz entsprechen, deutet dies auf eine nebenresonante Anregung hin. Eine solche Spektralbedingung kann beispielsweise ausgewertet werden, indem das Empfangssignal beziehungsweise der Zeitabschnitt in den Frequenzraum transformiert wird und dort nach Maxima gesucht wird. Ist keine allzu hohe Frequenzauflösung gewünscht, kann es zur Verbesserung der Robustheit zweckmäßig sein, hierbei benachbarte Frequenzbereiche zu größeren Frequenzbereichen zusammenzufassen, was auch als Binning bezeichnet wird.

In dem erfindungsgemäßen Verfahren ist es möglich, dass zeitlich nacheinander mehrmals die Empfangssignale für die Ausbreitungsrichtungen und die jeweilige Kreuzkorrelation ermittelt werden, wobei ein zeitlicher Verlauf der Höhe des Hauptmaximums und/oder wenigstens eines der Nebenmaxima der Kreuzkorrelation und/oder ein zeitlicher Verlauf eines Verarbeitungsergebnisses, das von den Höhen des Hauptmaximums und wenigstens eines der Nebenmaxima abhängt, erfasst wird, wobei die Erfüllung der Auslösebedingung von dem jeweiligen zeitlichen Verlauf abhängt.

Durch eine Erfassung des zeitlichen Verlaufs zumindest einer der genannten Größen können insbesondere Alterungsprozesse von Komponenten, insbesondere der Ultraschallwandler, erkannt werden. Dies kann zweckmäßig sein, um beispielsweise mit der Alterung der Komponenten den Betrieb der Messeinrichtung anzupassen und/oder um rechtzeitig, bevor eine entsprechende Alterung zu einer nicht akzeptablen Verschlechterung der Messgenauigkeit führt, einen die Wartung betreffenden Hinweis an einen Nutzer beziehungsweise eine externe Einrichtung, beispielsweise des Herstellers der Messeinrichtung oder einer Messservicefirma, auszugeben. Die Berücksichtigung des Verlaufs zumindest einer der genannten Größen kann jedoch auch vorteilhaft sein, um zwischen einer Veränderung der genannten Größen aufgrund der Alterung und einer plötzlichen Änderung, beispielsweise aufgrund einer spezifischen Störung oder eines Manipulationsversuchs, unterscheiden zu können.

Vor dem Abstrahlen des jeweiligen Ultraschallsignals kann für wenigstens eine der Ausbreitungsrichtungen durch den jeweiligen sendenden Ultraschallwandler mehrmals ein Testultraschallsignal abgestrahlt und über das Fluid zu dem jeweiligen empfangenden Ultraschallwandler übertragen werden, wobei über den jeweiligen empfangenden Ultraschallwandler ein jeweiliges Testempfangssignal erfasst wird, wobei der jeweilige sendende Ultraschallwandler zur Abstrahlung des jeweiligen Testultraschallsignals jeweils mit einem, insbesondere durch die Einhüllende amplitudenmodulierten, Testanregungssignal angesteuert wird, wobei sich die Testanregungssignale bezüglich ihrer Trägerfrequenz und/oder der Größe ihres Phasensprungs voneinander unterscheiden, wobei jenes Testanregungssignal als Anregungssignal zur Bestimmung des Laufzeitunterschieds gewählt wird, für das im resultierenden Testempfangssignal der maximale Phasensprung und/oder die maximale Separation von lokalen Maxima einer Einhüllenden des Testempfangssignals resultieren. Ein Maß für die Separation der Maxima der Einhüllenden kann von dem zeitlichen Abstand der Maxima und/oder von einer minimalen Höhe der Einhüllenden zwischen den Maxima abhängen. Insbesondere kann dieses Maß von dem Verhältnis dieser minimalen Höhe zu der Höhe eines der benachbarten lokalen Maxima, insbesondere des niedrigeren der Maxima, abhängen.

Ein großer Phasensprung in den Empfangssignalen beziehungsweise eine starke Separierung der lokalen Maxima der Einhüllenden der Empfangssignale führt dazu, dass bei einer Kreuzkorrelation von Empfangssignalen beziehungsweise aus diesen ermittelten Verarbeitungssignalen die Nebenmaxima stark unterdrückt werden. Somit führt das beschriebene Vorgehen insbesondere dazu, dass als Anregungssignal jenes der Testanregungssignale gewählt wird, bei dessen Nutzung das Hauptmaximum sich besonders deutlich von den Nebenmaxima abhebt, wodurch eine besonders robuste Ermittlung des Laufzeitunterschieds und somit der Messgröße möglich ist.

Die beschriebene Wahl des Anregungssignals aus mehreren Testanregungssignalen kann einmalig zur Kalibrierung der Messeinrichtung, beispielsweise unmittelbar nach deren Herstellung oder nach deren Einbau durchgeführt werden. Es ist aber auch möglich, diese Auswahl unter bestimmten Bedingungen, beispielsweise nach Erfüllung der Auslösebedingung und/oder der Spektralbedingung und/oder nach bestimmten Zeiträumen oder nach Ermittlung eines bestimmten Alterungsgrades zu wiederholen.

Die Größe des Phasensprungs kann ermittelt werden, indem für mehrere Fenster des jeweiligen Testempfangssignals jeweils eine Fouriertransformation durchgeführt wird. Durch Fouriertransformationen kann für jedes dieser Fenster, also für die verschiedenen Zeitabschnitte des Testempfangssignals, für jede der im Testempfangssignal enthaltenen Frequenzen eine Phase ermittelt werden. Eine starke Änderung der Phase der dominanten Frequenz zwischen benachbarten Fenstern entspricht dem Phasensprung, womit dieser direkt durch Subtraktion der relativen Phasenlagen berechnet werden kann. Alternativ wäre es beispielsweise möglich, den Phasensprung direkt durch Anfitten einer jeweiligen Sinusfunktion, insbesondere mit Einhüllender, an einen Teil des Empfangssignals vor und nach dem Phasensprung zu ermitteln.

Die Erfüllung der Auslösebedingung kann von der Differenz und/oder von dem Quotienten der Höhe des Hauptmaximums und der Höhe eines der Nebenmaxima, insbesondere des höchsten Nebenmaximums, abhängen. Insbesondere kann die Auslösebedingung von einem Vergleich einer dieser Größen mit einem Grenzwert abhängen. Ist das Hauptmaximum absolut oder relativ ausreichend viel größer als alle Nebenmaxima beziehungsweise das höchste Nebenmaxima, spricht dies für eine hohe Robustheit der Erkennung des Hauptmaximums. Anderenfalls kann die Auslösebedingung erfüllt werden, z.B. um auf Störungen, die zu einer nicht eindeutigen Identifizierbarkeit des Hauptmaximums führen könnte, hinzuweisen beziehungsweise die Robustheit durch eine geänderte Ermittlung der Messgröße zu verbessern.

In dem Fall, in dem die Erfüllung der Auslösebedingung von der Höhe des Hauptmaximums und/oder des Nebenmaximums der Kreuzkorrelation der Verarbeitungssignale abhängt, kann das jeweilige Verarbeitungssignal durch Normalisierung des jeweiligen Empfangssignals oder eines jeweiligen aus dem Empfangssignal ermittelten Zwischensignals ermittelt werden. Ergänzend oder alternativ kann die Höhe des Hauptmaximums und/oder des Nebenmaximums der Kreuzkorrelation nach einer Normalisierung der Kreuzkorrelation ermittelt werden.

Durch eine Normalisierung werden die Werte des jeweiligen Empfangssignals bzw. Verarbeitungssignals bzw. der Kreuzkorrelation mit einem vorgegebenen Faktor skaliert. Beispielsweise kann ein bestimmter Wert, z.B. das jeweilige globale Maximum, auf einen vorgegebenen Wert, z.B. eins, skaliert werden und die weiteren Werte können mit dem gleichen Skalierungsfaktor skaliert werden. Im Falle der Normalisierung der Kreuzkorrelation können alle Werte mit einem Skalierungsfaktor skaliert werden, der von den Amplituden der beiden Autokorrelation der beiden kreuzkorrelierten Empfangs- bzw. Verarbeitungssignale abhängt. Insbesondere kann ein Skalierungsfaktor genutzt werden, der umgekehrt proportional zu der Wurzel des Produkts der Amplituden der Autokorrelationen ist.

Eine geeignete Normalisierung führt dazu, dass das Kreuzprodukt im Wesentlichen unabhängig von der Amplitude der Eingangssignale ist und somit nur eine Ähnlichkeit beziehungsweise zeitliche Verschiebung der Eingangssignale zueinander betrifft. Das Zwischensignal kann beispielsweise durch Upsampling, Interpolation und/oder Filterung des jeweiligen Empfangssignals und/oder durch Auswahl eines Teilsignals aus dem jeweiligen Empfangssignal, insbesondere zur Reduzierung des Rechenaufwandes und somit des Energiebedarfs der Berechnung, ermittelt werden.

Neben dem erfindungsgemäßen Verfahren betrifft die Erfindung eine Messeinrichtung zur Ermittlung einer den Durchfluss eines Fluids durch ein Messrohr betreffenden Messgröße, umfassend ein das Fluid führendes Messrohr, wenigstens zwei in oder an dem Messrohr angeordnete Ultraschallwandler und eine Steuereinrichtung, die zur Ansteuerung der Ultraschallwandler, zur Erfassung von Empfangssignalen über die Ultraschallwandler und zur Ermittlung der Messgröße in Abhängigkeit der Empfangssignale eingerichtet ist, wobei die Steuereinrichtung zur Durchführung des erfindungsgemäßen Verfahrens eingerichtet ist.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel einer erfindungsgemäßen Messeinrichtung,
- Fig. 2: den Ablauf eines Ausführungsbeispiels des erfindungsgemäßen Verfahrens,
- Fig. 3: im erfindungsgemäßen Verfahren nutzbare Anregungssignale und resultierende Empfangssignale,
- Fig. 4 und 5: Kreuzkorrelationen von Empfangssignalen in Ausführungsbeispielen des erfindungsgemäßen Verfahrens, und
- Fig. 6: Schritte zur Ermittlung eines geeigneten Anregungssignals in einem Ausführungsbeispiel des erfindungsgemäßen Verfahrens.

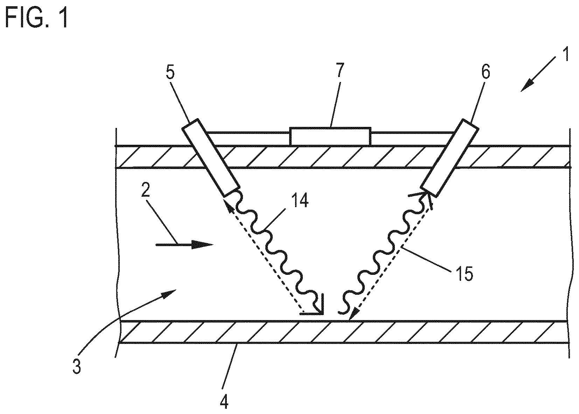

Fig. 1 zeigt eine Messeinrichtung 1 zur Ermittlung einer den Durchfluss eines Fluids 3 durch ein Messrohr 4 betreffenden Messgröße, insbesondere einer Strömungsgeschwindigkeit oder eines Durchflussvolumens. Das Fluid 3 strömt hierbei in die durch den Pfeil 2 gezeigte Richtung durch das Messrohr 4. Eine Steuereinrichtung 7 steuert einerseits den Ultraschallwandler 5 als sendenden Ultraschallwandler an, um das Ultraschallsignal 14 in Strömungsrichtung auszusenden, das nach einer Reflektion an der Rohrwand durch den Ultraschallwandler 6 empfangen wird, wobei das entsprechende Empfangssignal durch die Steuereinrichtung 7 über den empfangenden Ultraschallwandler 6 erfasst wird. Umgekehrt steuert die Steuereinrichtung 7 den Ultraschallwandler 6 als sendenden Ultraschallwandler an, um das Ultraschallsignal 15 entgegen der Strömungsrichtung zu dem nun empfangenden Ultraschallwandler 5 zu übertragen, über den durch die Steuereinrichtung 7 ein entsprechendes Empfangssignal erfasst wird.

Auf Basis dieser beiden Empfangssignale kann eine Laufzeitdifferenz zwischen der Laufzeit des Ultraschallsignals 14 von dem Ultraschallwandler 5 zum Ultraschallwandler 6 und der Laufzeit des Ultraschallsignals 15 von dem Ultraschallwandler 6 zu dem Ultraschallwandler 5 ermittelt werden, die, wie an sich wohl bekannt ist, mit der Strömungsgeschwindigkeit des Fluids 3 korreliert, so dass bei bekannter Messrohrgeometrie ein Volumenstrom für das Fluid 3 bestimmt werden kann.

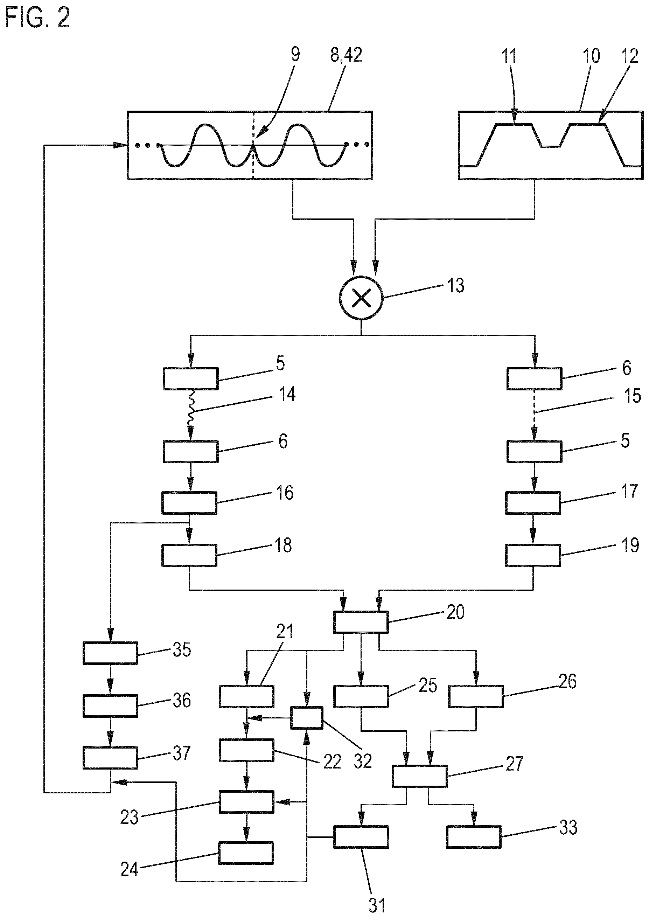

Details zu einem durch die Steuereinrichtung 7 implementierten Verfahren zur Ermittlung einer Messgröße 24, beispielsweise des Durchflussvolumens, werden im Folgenden mit zusätzlichem Bezug auf Fig. 2 erläutert.

Zunächst wird ein Anregungssignal 8, 42 mit einer festen Trägerfrequenz und Amplitude bereitgestellt, wonach eine Amplitudenmodulation 13 des Anregungssignals 8 mit einer Einhüllenden 10 erfolgt. Alternativ wäre es auch möglich, das Anregungssignal 8, 42 unmittelbar mit einer zeitlich veränderlichen Amplitude, die durch eine entsprechende Einhüllende 10 vorgegeben wird, zu generieren. Das amplitudenmodulierte Anregungssignal 8, 42 wird, typischerweise nacheinander, den Ultraschallwandlern 5, 6 zugeführt, wodurch diese die Ultraschallsignale 14, 15 abstrahlen, deren Empfang beim jeweils anderen an der Ultraschallwandler 5, 6 die Bereitstellung der jeweiligen Empfangssignale 16, 17 an die Steuereinrichtung 7 ermöglicht. Optional kann aus dem jeweiligen Empfangssignal 16, 17 zunächst ein Verarbeitungssignal 18, 19 ermittelt werden, beispielsweise durch Upsampling, Filterung und/oder eine Skalierung, insbesondere eine Normalisierung. Alternativ oder ergänzend kann zur Ermittlung des Verarbeitungssignals ein Teilsignal aus dem jeweiligen Empfangssignal ausgewählt werden. Durch Einschränkung der Kreuzkorrelation auf Teilsignale kann der Rechenaufwand und somit der Energiebedarf der Berechnung reduziert werden.

Anschließend erfolgt eine Kreuzkorrelation 20 der Empfangssignale 16, 17 beziehungsweise der Verarbeitungssignale 18, 19. Die Kreuzkorrelation 20 zweier Signale x, y, die hier als R_{xy} bezeichnet wird, kann wie folgt berechnet werden: ${R}_{xy} \left(τ\right) = {\int }_{- ∞}^{∞} x \left(t\right) ⋅ y \left(t+τ\right) dt$

Bei einer zeitdiskreten Erfassung der Empfangssignale kann das Integral auch als Summe über die einzelnen Samples ausgedrückt werden.

Optional kann auch die Kreuzkorrelation 20 selbst normalisiert werden, beispielsweise in Abhängigkeit der Amplituden der Autokorrelationen der Empfangs- bzw. Zwischensignale skaliert werden, wie bereits obig erläutert wurde, oder indem die Funktion R_{xy} durch den Wert dieser Funktion bei τ = 0 geteilt wird.

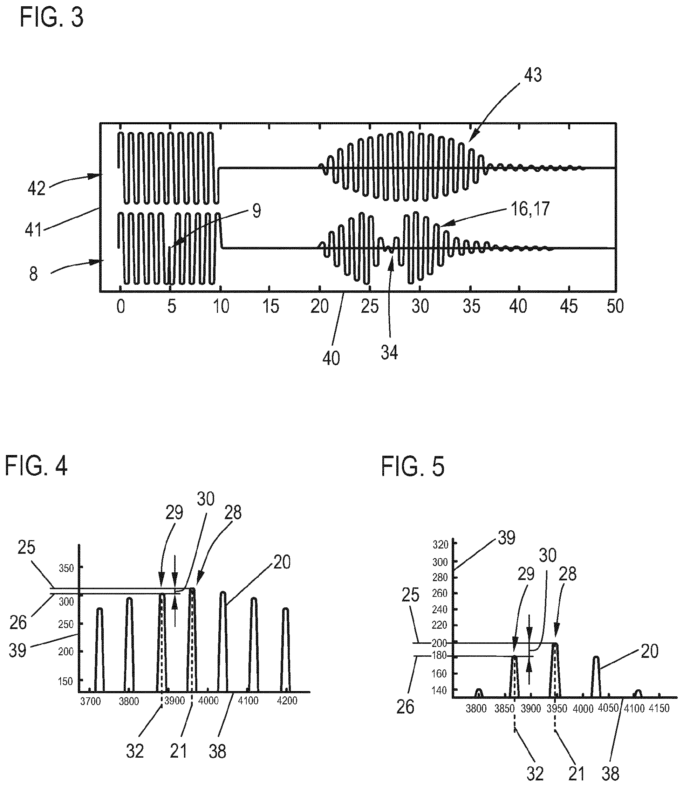

Beispiele für die genutzten Signale und resultierende Kreuzkorrelationen werden im Folgenden mit zusätzlichem Bezug auf die Figuren 3 bis 5 diskutiert. Als Vergleichsbeispiel, das nicht unter den Schutzumfang der Ansprüche fällt, wird hierbei zunächst davon ausgegangen, dass die Einhüllende 10 eine Rechteckfunktion ist, so dass das jeweils genutzte Anregungssignal 8, 42 für einige Zyklen mit fester Amplitude an den jeweiligen Ultraschallwandler 5, 6 ausgegeben wird und anschließend die Ansteuerung abrupt beendet wird.

In einem ersten Beispiel, das in der oberen Zeile in Fig. 3 gezeigt ist, wird als Anregungssignal 42 eine normale Sinusschwingung genutzt. Die X-Achse 40 gibt den zeitlichen Verlauf in µs an und die Y-Achse 41 die Amplitude. Aufgrund der Übertragungseigenschaften einer üblichen Messstrecke resultiert bei Nutzung dieses Anregungssignals 42 beispielsweise das Empfangssignal 43.

Werden zwei solche Empfangssignale 43 kreuzkorreliert, resultiert die in Fig. 4 gezeigte Kreuzkorrelation 20. Hierbei ist auf der X-Achse 38 eine Samplezahl und somit letztlich eine Zeit aufgetragen, und auf der Y-Achse 39 die Amplitude der Kreuzkorrelation 20 in beliebigen Einheiten. Zur deutlicheren Hervorhebung der diskutierten Merkmale ist in Fig. 4 und Fig. 5 nur ein relativ kleiner Ausschnitt der jeweiligen Kreuzkorrelation 20, der die höchsten Maxima der jeweiligen Kreuzkorrelation 20 darstellt, gezeigt. In Fig. 4 ist zu erkennen, dass sich die Höhe 25 des Hauptmaximums 28 von der Höhe 26 des nächst höheren Nebenmaximums 29 nur um einen kleinen Differenzbetrag 30 unterscheidet. Bereits relativ geringfügige Störungen der Messung können somit dazu führen, dass statt dem Hauptmaximum 28 das Nebenmaximum 29 als Hauptmaximum erkannt wird. Da die Zeitachse der Kreuzkorrelation mit der Laufzeitdifferenz korreliert, würde hieraus ein großer Messfehler für die Laufzeitdifferenz und somit auch für die Messgröße resultieren. Wie später noch erläutert werden wird, können entsprechende Störungen durch Auswertung einer Auslösebedingung 27 in der Regel erkannt und entsprechend hierauf reagiert werden, so dass prinzipiell auch eine robuste Ermittlung der Messgröße bei Nutzung des Anregungssignals 42 möglich ist. Im Folgenden soll jedoch zunächst ein Ansatz erläutert werden, um das Risiko eines solchen Messfehlers von vornherein zu senken.

Wie in Fig. 2 beziehungsweise in der unteren Zeile von Fig. 3 dargestellt ist, kann ein Anregungssignal 8 genutzt werden, das einen Phasensprung 9, im Beispiel von 180°, aufweist. Alternativ könnten auch andere Größen des Phasensprungs, beispielsweise 90° oder 270° oder auch dazwischen liegende Werte, genutzt werden. Ein Phasensprung um 180° ist besonders einfach zu implementieren, da er z.B. durch Invertierung des Signals am Nulldurchgang erzeugt werden kann. Wird das Anregungssignal jedoch beispielsweise digital erzeugt und vor oder nach der Amplitudenmodulation durch die Einhüllende 10 über einen Digital-Analog-Wandler in ein analoges Steuersignal umgesetzt, können auch beliebig große Phasensprünge ohne zusätzlichen Hardwareaufwand implementiert werden.

Das aus einer solchen Anregung resultierende Empfangssignal 16, 17 ist ebenfalls in Fig. 3 dargestellt. Auch dieses weist im Bereich 34 einen Phasensprung auf und die Amplitude des Signals ist in diesem Bereich 34 deutlich reduziert. Die Kreuzkorrelation 20 zweier solcher Empfangssignale 16, 17 ist in Fig. 5 dargestellt. Im Vergleich zur in Fig. 4 gezeigten Kreuzkorrelation ist zu erkennen, dass zwar die Höhe 25 des Hauptmaximums 28 durch die Nutzung des Phasensprungs 9 deutlich reduziert ist, die Höhe 26 der Nebenmaxima 29 ist demgegenüber jedoch noch stärker reduziert, so dass sowohl relativ als auch absolut ein größerer Differenzbetrag 30 resultiert, als er ohne die Nutzung dieses Phasensprungs 9 resultieren würde. Somit kann das Hauptmaximum 28 und somit dessen Lage 21 durch Nutzung des Phasensprungs 9 im Anregungssignal 8 erheblich robuster erkannt werden.

Eine ähnlich starke Absenkung der Höhe der Nebenmaxima 29 kann auch ohne Nutzung eines Phasensprungs 9 erreicht werden, wenn, wie in Fig. 2 gezeigt ist, eine Einhüllende 10 mit mehreren zeitlich beabstandeten Maxima 11, 12 verwendet wird. Selbstverständlich können auch beide Ansätze kombiniert werden, wie in Fig. 2 dargestellt ist.

Wiederum mit Bezug auf Fig. 2 kann nach Ermittlung der Kreuzkorrelation 20 aus dieser die Lage 21 des Hauptmaximums 28 entnommen werden, beispielsweise indem das globale Maximum aufgefunden wird. Diese Lage 21 entspricht jener Zeitverschiebung zwischen den Empfangssignalen 16, 17, mit der diese möglichst ähnlich zueinander sind und somit dem Laufzeitunterschied 22 der Ultraschallsignale 14, 15. Je nachdem, wie die Zeitfenster gewählt sind, während denen eine Messdatenerfassung für die Empfangssignale 16, 17 erfolgt, kann sich die Lage 21 des Hauptmaximums 28 auch um einen festen Offset von der Laufzeitdifferenz unterscheiden.

Mithilfe einer Ermittlungsvorschrift 23 kann aus dem Laufzeitunterschied 22 die Messgröße 24, also beispielsweise eine Strömungsgeschwindigkeit oder ein Durchflussvolumen pro Zeit ermittelt werden. Im einfachsten Fall kann es sich bei der Ermittlungsvorschrift 23 um eine Multiplikation mit einer vorgegebenen Konstante handeln, es ist jedoch auch möglich, Nichtlinearitäten, beispielsweise aufgrund einer Veränderung des Strömungsprofils, die von der Strömungsgeschwindigkeit abhängt, zu berücksichtigen, beispielsweise durch Nutzung einer Look-up-Tabelle oder eines definierten mathematischen Zusammenhangs als Ermittlungsvorschrift 23 oder als Teil hiervon.

Insbesondere dann, wenn als Anregungssignal 42 ein Anregungssignal ohne Phasensprung 9 genutzt wird und eine einfache Einhüllende, beispielsweise eine rechteckige Einhüllende, verwendet wird, aber auch in den anderen obig diskutierten Fällen ist es zweckmäßig, auf Basis der erfassten Empfangssignale 16, 17 zu prüfen, ob voraussichtlich eine robuste Ermittlung der Messgröße 24 möglich ist oder ob beispielsweise eine Wartung der Messeinrichtung oder eine Neuermittlung von Messdaten aufgrund einer Störung oder eines Manipulationsversuches erforderlich ist.

Hierzu können, wie in Fig. 2 dargestellt ist, aus der Kreuzkorrelation 20 die Höhen 25, 26 des Haupt- und Nebenmaximums 28, 29 ermittelt werden, wonach eine Auslösebedingung 27 ausgewertet werden kann, die von diesen Größen oder wenigstens einer dieser Größen abhängt. Die Auswirkungen verschiedener Störungen und Einflüsse auf die Höhen 25, 26 des Hauptmaximums 28 und der Nebenmaxima 29 wurden bereits im allgemeinen Teil detailliert erläutert, weshalb hier nur beispielhaft einzelne Punkte herausgegriffen werden sollen. Beispielsweise können zeitliche Verläufe der Höhen 25, 26 über eine Vielzahl von Messungen hinweg erfasst werden und auf Basis der zeitlichen Veränderung der Höhen 25, 26 können Alterungsprozesse erkannt werden und somit beispielsweise eine Nachricht 33 an einen Nutzer oder eine weitere Einrichtung ausgegeben werden, um auf einen Wartungsbedarf hinzuweisen. Eine solche Nachricht 33 kann beispielsweise auch ausgegeben werden, wenn wiederholt oder mit einer gewissen Häufigkeit Störungen erkannt werden bzw. diese nicht durch eine Anpassung 31 der Ermittlung der Messgröße 24 gegenüber dem Normalbetriebsmodus kompensiert werden können.

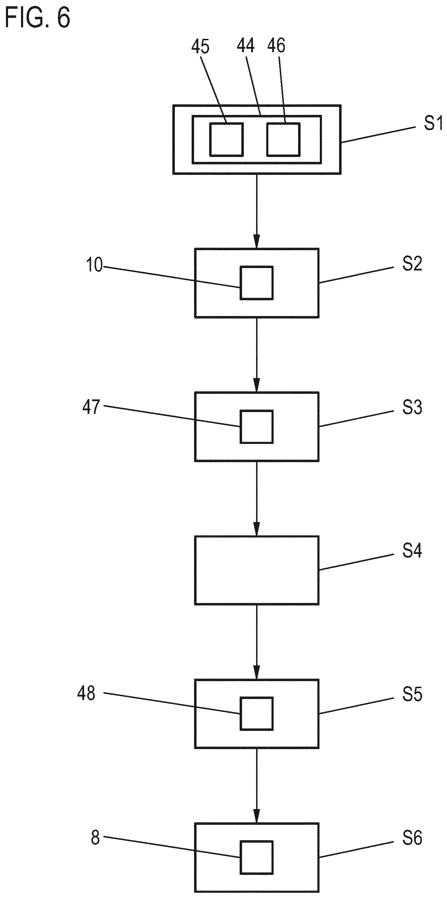

Zur Anpassung 31 der Ermittlung der Messgröße 24 stehen eine Vielzahl von Möglichkeiten bereit, die bereits im allgemeinen Teil diskutiert wurden. Im Folgenden sollen daher nur einige beispielhafte Anpassungen 31 genannt werden. So ist es beispielsweise möglich, die vorangehend erfassten Empfangssignale 16, 17 bei Erfüllung der Auslösebedingung 27 zu verwerfen und eine erneute Ermittlung durchzuführen, also den in Fig. 2 dargestellten Ablauf von Beginn an zu wiederholen. Hierbei ist es insbesondere möglich, dass die Trägerfrequenz und/oder die Größe des Phasensprungs 9 des Anregungssignals 8 modifiziert werden. Hierzu kann beispielsweise das später noch mit Bezug auf Fig. 6 erläuterte Vorgehen genutzt werden.

Statt einer Neuermittlung wäre es jedoch beispielsweise auch möglich, zunächst die in einer vorangehenden Iteration ermittelte Messgröße weiter zu verwenden und erst zu einem späteren Zeitpunkt, zu dem die Auslösebedingung beispielsweise nicht mehr erfüllt ist, die Messgröße neu zu bestimmen.

Wie ebenfalls bereits im allgemeinen Teil dargestellt wurde, kann die Auswertung der Auslösebedingung 27 jedoch auch dazu dienen, Messsituationen mit hohem Durchfluss durch das Messrohr zu erkennen. In diesem Fall kann es vorteilhaft sein, die Empfangssignale 16, 17 beizubehalten und nur die anschließende Weiterverarbeitung der resultierenden Kreuzkorrelation 20 zu modifizieren. Beispielsweise kann die Ermittlungsvorschrift 23 modifiziert werden, um nichtlineare Effekte bei hohen Strömungsgeschwindigkeiten bzw. Turbulenzen der Strömung zu berücksichtigen. In einigen Fällen kann es jedoch auch zweckmäßig sein, zur Ermittlung der Messgröße 24 bzw. der Laufzeit 22 statt der Lage 21 des Hauptmaximums 28 die Lage 32 des Nebenmaximums 29 zu nutzen. Dies kann beispielsweise der Fall sein, wenn die Höhen 25, 26 von Haupt- und Nebenmaximum 28, 29 sehr ähnlich sind und zugleich die Lage 21 des Hauptmaximums 28 auf einen relativ niedrigen Fluss hinweisen würde, während beispielsweise die Höhe 25 des Hauptmaximums 28 eher eine schwache Korrelation aufgrund der Verzerrung eines der Empfangssignale 16, 17 durch einen hohen Fluss indiziert.

Die Qualität der Empfangssignale 16, 17 und somit die Robustheit der Ermittlung der Messgröße 24 kann zudem durch Auswertung einer Spektralbedingung 37 überwacht werden, was aus Übersichtlichkeitsgründen nur für eines der Empfangssignale 16 dargestellt ist. Hierzu kann zunächst die spektrale Zusammensetzung 35 des jeweiligen Empfangssignals 16, 17 ermittelt werden und es kann anschließend jener Frequenzbereich 36 ermittelt werden, in dem die Frequenzen des Empfangssignals 16, 17 die maximale Amplitude aufweisen. Die Spektralbedingung 37 kann beispielsweise erfüllt sein, wenn die Frequenz des Anregungssignals 8, 42 außerhalb dieses Frequenzbereichs 36 liegt, da dies beispielsweise auf eine verstimmte Resonanzfrequenz eines der Ultraschallwandler aufgrund von Umgebungsbedingungen, einer Beschädigung oder aus anderen Gründen hinweisen kann.

Bei Erfüllung der Spektralbedingung 37 können bei der nächsten Ermittlung der Empfangssignale 16, 17 bzw. bei einer Wiederholung der Ermittlung der Empfangssignale 16, 17 insbesondere die Trägerfrequenz und/oder die Größe des Phasensprungs 9 des genutzten Anregungssignals 8, 42 angepasst werden.

Fig. 6 zeigt Schritte S1-S6, die genutzt werden können, um ein geeignetes Anregungssignal 8 zu bestimmen. Diese Schritte können beispielsweise bei einer Kalibrierung der Messeinrichtung 1 nach der Herstellung bzw. nach Einbau am Nutzungsort durchgeführt werden oder auch dann, wenn beispielsweise die Auslösebedingung 27 bzw. die Spektralbedingung 37 erfüllt ist, um eine geeignete Trägerfrequenz bzw. eine geeignete Größe des Phasensprungs 9 zu ermitteln. Hierbei werden in Schritt S1 zunächst mehrere verschiedene Testanregungssignale 44 bereitgestellt bzw. generiert, die sich bezüglich ihrer Trägerfrequenz 45 und/oder der Größe 46 des Phasensprungs 9 voneinander unterscheiden.

In Schritt S2 wird das jeweilige Testentrichtungssignal 44 mit der Einhüllenden 10 multipliziert bzw. amplitudenmoduliert und an einen der Ultraschallwandler 5, 6 ausgegeben.

In Schritt S3 werden über den jeweils anderen Ultraschallwandler zugeordnete Testempfangssignale 47 empfangen. Für mehrere Fenster dieser Testempfangssignale 47 wird in Schritt S4 dann jeweils eine Fouriertransformation durchgeführt, wobei nicht nur die Amplitude für eine jeweilige Frequenz, sondern auch eine Phase ermittelt wird. Durch Vergleich der Phasen der dominanten Frequenz in benachbarten Fenstern kann die Größe 48 des Phasensprungs des jeweiligen Testempfangssignals 47 ermittelt werden.

In Schritt S6 wird dann jenes der Testanregungssignale 44 als Anregungssignal 8 ausgewählt, für das die Größe 48 des Phasensprungs des resultierenden Testempfangssignals 47 am größten war.

### Bezugszeichenliste

- 1: Messeinrichtung
- 2: Pfeil
- 3: Fluid
- 4: Messrohr
- 5: Ultraschallwandler
- 6: Ultraschallwandler
- 7: Steuereinrichtung
- 8: Anregungssignal
- 9: Phasensprung
- 10: Einhüllende
- 11: Maximum
- 12: Maximum
- 13: Amplitudenmodulation
- 14: Ultraschallsignal
- 15: Ultraschallsignal
- 16: Empfangssignal
- 17: Empfangssignal
- 18: Verarbeitungssignal
- 19: Verarbeitungssignal
- 20: Kreuzkorrelation
- 21: Lage
- 22: Laufzeitunterschied
- 23: Ermittlungsvorschrift
- 24: Messgröße
- 25: Höhe
- 26: Höhe
- 27: Auslösebedingung
- 28: Hauptmaximum
- 29: Nebenmaximum
- 30: Differenzbetrag
- 31: Anpassung
- 32: Lage
- 33: Nachricht
- 34: Bereich
- 35: spektrale Zusammensetzung
- 36: Frequenzbereich
- 37: Spektralbedingung
- 38: X-Achse
- 39: Y-Achse
- 40: X-Achse
- 41: Y-Achse
- 42: Anregungssignal
- 43: Empfangssignal
- 44: Testanregungssignal
- 45: Trägerfrequenz
- 46: Größe
- 47: Testempfangssignal
- 48: Größe

- S1 - S6: Schritt

## Patentansprüche

1. Verfahren zur Ermittlung einer den Durchflusses eines Fluids (3) durch ein Messrohr (4) betreffenden Messgröße (24) durch eine Messeinrichtung (1), wobei für zwei Ausbreitungsrichtungen jeweils durch einen sendenden Ultraschallwandler (5, 6) der Messeinrichtung (1) ein Ultraschallsignal (14, 15) abgestrahlt und über das Fluid zu einem empfangenden Ultraschallwandler (5, 6) der Messeinrichtung (1) übertragen wird, wobei über den jeweiligen empfangenden Ultraschallwandler (5, 6) ein Empfangssignal (16, 17) für die jeweilige Ausbreitungsrichtung erfasst wird, wobei in Abhängigkeit der Lage (21) des Hauptmaximums (28) einer Kreuzkorrelation (20) der Empfangssignale (16, 17) für die zwei Ausbreitungsrichtungen oder einer Kreuzkorrelation (20) von Verarbeitungssignalen (18, 19), die jeweils von einem der Empfangssignale (16, 17) oder von einem Teilsignal des jeweiligen Empfangssignals (16, 17) abhängen, ein Laufzeitunterschied (22) zwischen den Laufzeiten des jeweiligen Ultraschallsignals (14, 15) für die jeweilige Ausbreitungsrichtung von dem jeweiligen sendenden Ultraschallwandler (5, 6) zu dem jeweiligen empfangenden Ultraschallwandler (5, 6) ermittelt wird, wonach die Messgröße (24) in Abhängigkeit des Laufzeitunterschieds (22) ermittelt wird, wobei der sendende Ultraschallwandler (5, 6) jeweils mit einem Anregungssignal (8, 42) angesteuert wird, wobei einerseits das Anregungssignal (8, 42) eine feste Trägerfrequenz aufweist,
**dadurch gekennzeichnet, dass**
das Anregungssignal (8) eine Einhüllende (10) mit mehreren zeitlich beabstandeten Maxima (11, 12) aufweist, und
dass andererseits bei Erfüllung einer Auslösebedingung (27), deren Erfüllung von
der Höhe (25, 26) wenigstens eines Nebenmaximums (29) der Kreuzkorrelation (20) abhängt, die Ermittlung der Messgröße (24) gegenüber einem Normalbetriebsmodus modifiziert und/oder eine Nachricht (33) an einen Nutzer der Messeinrichtung (1) und/oder eine messeinrichtungsexterne weitere Einrichtung ausgegeben wird.

2. Verfahren nach Anspruch 1, **dadurch gekennzeichnet, dass** einerseits in dem Fall, dass das Anregungssignal (8, 42) eine feste Trägerfrequenz aufweist, das Anregungssignal zusätzlich einen Phasensprung (9) aufweist und/oder dass andererseits in dem Fall, dass bei Erfüllung der Auslösebedingung (27) die Ermittlung der Messgröße (24) gegenüber einem Normalbetriebsmodus modifiziert und/oder die Nachricht (33) an den Nutzer der Messeinrichtung (1) und/oder die messeinrichtungsexterne weitere Einrichtung ausgegeben wird, die Erfüllung der Auslösebedingung (27) zusätzlich von der Höhe (25, 26) des Hauptmaximums (28) der Kreuzkorrelation (20) abhängt.

3. Verfahren nach Anspruch 1 oder 2, **dadurch gekennzeichnet, dass** bei Erfüllung der Auslösebedingung (27) die Ermittlung der Messgröße (22) gegenüber dem Normalbetriebsmodus derart modifiziert wird, dass einerseits die Empfangssignale (16, 17) verworfen werden und entweder eine vorangehend ermittelte Messgröße (22) als aktuelle Messgröße (24) verwendet wird oder die Ermittlung der Empfangssignale (16, 17) zur Bereitstellung neuer Empfangssignale (16, 17) wiederholt wird, wobei die Ermittlung der neuen Empfangssignale (16, 17) gegenüber der Ermittlung der Empfangssignale (16, 17) entweder unverändert oder mit wenigstens einem geänderten Ermittlungsparameter erfolgt, und die Messgröße (24) auf Basis der neuen Empfangssignale (16, 17) ermittelt wird, und/oder dass andererseits der Laufzeitunterschied (22) in Abhängigkeit der Lage eines der Nebenmaxima (29) der Kreuzkorrelation (20) ermittelt wird und/oder eine Ermittlungsvorschrift (23) zur Ermittlung der Messgröße (24) aus dem Laufzeitunterschied (22) modifiziert wird.

4. Verfahren nach einem der vorangehenden Ansprüche, **dadurch gekennzeichnet, dass** bei Erfüllung der Auslösebedingung (27) und/oder bei Erfüllung einer Spektralbedingung (37), die von einer spektralen Zusammensetzung (35) wenigstens eines der Empfangssignale (16, 17) abhängt, nach einer ersten Ermittlung der Empfangssignale (16, 17) eine zweite Ermittlung der Empfangssignale (16, 17) erfolgt, wobei die Trägerfrequenz des Anregungssignals (8, 42) und/oder die Größe des Phasensprungs (9) gegenüber der ersten Ermittlung verändert wird.

5. Verfahren nach Anspruch 4, **dadurch gekennzeichnet, dass** die Erfüllung der Spektralbedingung (37) davon abhängt, Frequenzen welches Frequenzbereichs (36) in dem jeweiligen Empfangssignal (16, 17) oder in einem ausgewählten Zeitabschnitt des jeweiligen Empfangssignals (16, 17) die maximale Amplitude aufweisen.

6. Verfahren nach einem der vorangehenden Ansprüche, **dadurch gekennzeichnet, dass** zeitlich nacheinander mehrmals die Empfangssignale (16, 17) für die Ausbreitungsrichtungen und die jeweilige Kreuzkorrelation (20) ermittelt werden, wobei ein zeitlicher Verlauf der Höhe (25, 26) des Hauptmaximums (28) und/oder wenigstens eines der Nebenmaxima (29) der Kreuzkorrelation (20) und/oder ein zeitlicher Verlauf eines Verarbeitungsergebnisses, das von den Höhen (25, 26) des Hauptmaximums (28) und wenigstens eines der Nebenmaxima (29) abhängt, erfasst wird, wobei die Erfüllung der Auslösebedingung (27) von dem jeweiligen zeitlichen Verlauf abhängt.

7. Verfahren nach einem der vorangehenden Ansprüche, **dadurch gekennzeichnet, dass** vor dem Aussenden des Ultraschallsignals (14, 15) für wenigstens eine der Ausbreitungsrichtungen durch den jeweiligen sendenden Ultraschallwandler (5, 6) mehrmals ein Testultraschallsignal abgestrahlt und über das Fluid (3) zu dem jeweiligen empfangenden Ultraschallwandler (5, 6) übertragen wird, wobei über den jeweiligen empfangenden Ultraschallwandler (5, 6) ein jeweiliges Testempfangssignal (47) erfasst wird, wobei der jeweilige sendende Ultraschallwandler (5, 6) zur Abstrahlung des jeweiligen Testultraschallsignals jeweils mit einem, insbesondere durch die Einhüllende (10) amplitudenmodulierten, Testanregungssignal (44) angesteuert wird, wobei sich die Testanregungssignale (44) bezüglich ihrer Trägerfrequenz (45) und/oder der Größe (46) ihres Phasensprungs (9) voneinander unterscheiden, wobei jenes Testanregungssignal (44) als Anregungssignal (8, 42) zur Bestimmung des Laufzeitunterschieds (22) gewählt wird, für das im resultierenden Testempfangssignal (47) der maximale Phasensprung (48) und/oder die maximale Separation von lokalen Maxima einer Einhüllenden des Testempfangssignals (47) resultieren.

8. Verfahren nach Anspruch 7, **dadurch gekennzeichnet, dass** die Größe des Phasensprungs (48) ermittelt wird, indem für mehrere Fenster des jeweiligen Testempfangssignals (47) jeweils eine Fouriertransformation durchgeführt wird.

9. Verfahren nach einem der vorangehenden Ansprüche, **dadurch gekennzeichnet, dass** die Erfüllung der Auslösebedingung (27) von der Differenz und/oder von dem Quotienten der Höhe (25) des Hauptmaximums (28) und der Höhe (26) eines der Nebenmaxima (29), insbesondere des höchsten Nebenmaximums (26), abhängt.

10. Verfahren nach einem der vorangehenden Ansprüche, **dadurch gekennzeichnet, dass** einerseits die Erfüllung der Auslösebedingung (27) von der Höhe (25, 26) des Hauptmaximums (28) und/oder des Nebenmaximums (29) der Kreuzkorrelation (20) der Verarbeitungssignale (18, 19) abhängt, wobei das jeweilige Verarbeitungssignal (18, 19) durch Normalisierung des jeweiligen Empfangssignals (16, 17) oder eines jeweiligen aus dem Empfangssignal (16, 17) ermittelten Zwischensignals ermittelt wird und/oder dass andererseits die Höhe (25, 26) des Hauptmaximums (28) und/oder des Nebenmaximums (29) der Kreuzkorrelation (20) nach einer Normalisierung der Kreuzkorrelation (20) ermittelt wird.

11. Messeinrichtung zur Ermittlung einer den Durchfluss eines Fluids (3) durch ein Messrohr (4) betreffenden Messgröße (24), umfassend ein das Fluid (3) führendes Messrohr (4), wenigstens zwei in oder an dem Messrohr (4) angeordnete Ultraschallwandler (5, 6) und eine Steuereinrichtung (7), die zur Ansteuerung der Ultraschallwandler (5, 6), zur Erfassung von Empfangssignalen (16, 17) über die Ultraschallwandler (5, 6) und zur Ermittlung der Messgröße (24) in Abhängigkeit der Empfangssignale (16, 17) eingerichtet ist, **dadurch gekennzeichnet, dass** die Steuereinrichtung (7) zur Durchführung des Verfahrens nach einem der vorangehenden Ansprüche eingerichtet ist.

## Claims

1. Method for determining a measured quantity (24) relating to the flow of a fluid (3) through a measuring tube (4) by means of a measuring device (1), wherein, for two propagation directions, an ultrasonic signal (14, 15) is emitted in each case by a transmitting ultrasonic transducer (5, 6) of the measuring device (1) and is transmitted via the fluid to a receiving ultrasonic transducer (5, 6) of the measuring device (1), wherein a receive signal (16, 17) is captured via the respective receiving ultrasonic transducer (5, 6) for the respective propagation direction, wherein, depending on the position (21) of the main maximum (28) of a cross-correlation (20) of the receive signals (16, 17) for the two propagation directions or a cross-correlation (20) of processing signals (18, 19) which depend in each case on one of the receive signals (16, 17) or on a partial signal of the respective receive signal (16, 17), a transit time difference (22) between the transit times of the respective ultrasonic signal (14, 15) for the respective propagation direction from the respective transmitting ultrasonic transducer (5, 6) to the respective receiving ultrasonic transducer (5, 6) is determined, whereupon the measured quantity (24) is determined depending on the transit time difference (22), wherein the transmitting ultrasonic transducer (5, 6) is controlled in each case with an excitation signal (8, 42), wherein, on the one hand, the excitation signal (8, 42) has a fixed carrier frequency,
**characterized in that**
the excitation signal (8) has an envelope (10) with a plurality of temporally spaced maxima (11, 12), and
**in that**, on the other hand, when a trigger condition (27) is fulfilled, the fulfilment of which depends on the height (25, 26) of at least one secondary maximum (29) of the cross-correlation (20), the determination of the measured quantity (24) is modified compared with a normal operating mode and/or a message (33) is output to a user of the measuring device (1) and/or to a further device outside the measuring device.

2. Method according to Claim 1, **characterized in that**, on the one hand, in the event that the excitation signal (8, 42) has a fixed carrier frequency, the excitation signal additionally has a phase shift (9), and/or **in that**, on the other hand, in the event that, when the trigger condition (27) is fulfilled, the determination of the measured quantity (24) is modified compared with a normal operating mode and/or the message (33) is output to the user of the measuring device (1) and/or the further device outside the measuring device, the fulfilment of the trigger condition (27) additionally depends on the height (25, 26) of the main maximum (28) of the cross-correlation (20).

3. Method according to Claim 1 or 2, **characterized in that**, when the trigger condition (27) is fulfilled, the determination of the measured quantity (22) is modified compared with the normal operating mode in such a way that, on the one hand, the receive signals (16, 17) are rejected and either a previously determined measured quantity (22) is used as the current measured quantity (24) or the determination of the receive signals (16, 17) is repeated in order to provide new receive signals (16, 17), wherein the determination of the new receive signals (16, 17) is performed either unchanged or with at least one modified determination parameter compared with the determination of the receive signals (16, 17), and the measured quantity (24) is determined on the basis of the new receive signals (16, 17), and/or **in that**, on the other hand, the transit time difference (22) is determined depending on the position of one of the secondary maxima (29) of the cross-correlation (20) and/or a determination rule (23) is modified in order to determine the measured quantity (24) from the transit time difference (22).

4. Method according to one of the preceding claims, **characterized in that**, when the trigger condition (27) is fulfilled and/or a spectral condition (37) depending on a spectral composition (35) of at least one of the receive signals (16, 17) is fulfilled, a second determination of the receive signals (16, 17) is carried out following a first determination of the receive signals (16, 17), wherein the carrier frequency of the excitation signal (8, 42) and/or the size of the phase shift (9) is modified compared with the first determination.

5. Method according to Claim 4, **characterized in that** the fulfilment of the spectral condition (37) depends on the frequency range (36) in which frequencies have the maximum amplitude in the respective receive signal (16, 17) or in a selected time segment of the respective receive signal (16, 17).

6. Method according to one of the preceding claims, **characterized in that** the receive signals (16, 17) are determined multiple times in temporal succession for the propagation directions and the respective cross-correlation (20), wherein a time characteristic of the height (25, 26) of the main maximum (28) and/or at least one of the secondary maxima (29) of the cross-correlation (20) and/or a time characteristic of a processing result which depends on the heights (25, 26) of the main maximum (28) and at least one of the secondary maxima (29) is recorded, wherein the fulfilment of the trigger condition (27) depends on the respective time characteristic.

7. Method according to one of the preceding claims, **characterized in that** a test ultrasonic signal is emitted multiple times by the respective transmitting ultrasonic transducer (5, 6) and is transmitted via the fluid (3) to the respective receiving ultrasonic transducer (5, 6) for at least one of the propagation directions before the transmission of the ultrasonic signal (14, 15), wherein a respective test receive signal (47) is captured via the respective receiving ultrasonic transducer (5, 6), wherein the respective transmitting ultrasonic transducer (5, 6) is controlled to emit the respective test ultrasonic signal in each case with a test excitation signal (44), in particular amplitude-modulated by the envelope (10), wherein the test excitation signals (44) differ from one another in terms of their carrier frequency (45) and/or the size (46) of their phase shift (9), wherein the test excitation signal (44) for which the maximum phase shift (48) and/or the maximum separation of local maxima of an envelope of the test receive signal (47) occur in the resulting test receive signal (47) is chosen as the excitation signal (8, 42) for determining the transit time difference (22).

8. Method according to Claim 7, **characterized in that** the size of the phase shift (48) is determined by performing a Fourier transform in each case for a plurality of windows of the respective test receive signal (47).

9. Method according to one of the preceding claims, **characterized in that** the fulfilment of the trigger condition (27) depends on the difference and/or the quotient of the height (25) of the main maximum (28) and the height (26) of one of the secondary maxima (29), in particular the highest secondary maximum (26).

10. Method according to one of the preceding claims, **characterized in that**, on the one hand, the fulfilment of the trigger condition (27) depends on the height (25, 26) of the main maximum (28) and/or the secondary maximum (29) of the cross-correlation (20) of the processing signals (18, 19), wherein the respective processing signal (18, 19) is determined through normalization of the respective receive signal (16, 17) or of a respective intermediate signal determined from the receive signal (16, 17) and/or **in that**, on the other hand, the height (25, 26) of the main maximum (28) and/or the secondary maximum (29) of the cross-correlation (20) is determined following a normalization of the cross-correlation (20).

11. Measuring device for determining a measured quantity (24) relating to the flow of a fluid (3) through a measuring tube (4), comprising a measuring tube (4) guiding the fluid (3), at least two ultrasonic transducers (5, 6) arranged in or on the measuring tube (4), and a control device (7) which is configured to control the ultrasonic transducers (5, 6), to capture receive signals (16, 17) via the ultrasonic transducers (5, 6) and to determine the measured quantity (24) depending on the receive signals (16, 17), **characterized in that** the control device (7) is configured to carry out the method according to one of the preceding claims.

## Revendications

1. Procédé de détermination d'une grandeur de mesure (24) concernant l'écoulement d'un fluide (1) à travers un tube de mesure (4) par un dispositif de mesure (3), un signal ultrasonore (14, 15) étant respectivement émis par un transducteur ultrasonore émetteur (5, 6) du dispositif de mesure (1) et transmis par l'intermédiaire du fluide vers un transducteur ultrasonore récepteur (5, 6) du dispositif de mesure (1) pour deux directions de propagation, un signal reçu (16, 17) pour la direction de propagation respective étant détecté par l'intermédiaire du transducteur ultrasonore récepteur (5, 6) respectif, une différence de temps de propagation (22) entre les temps de propagation du signal ultrasonore (14, 15) respectif pour la direction de propagation respective du transducteur ultrasonore émetteur (5, 6) respectif vers le transducteur ultrasonore récepteur (5, 6) respectif étant déterminée en fonction de la position (21) du maximum principal (28) d'une corrélation croisée (20) des signaux reçus (16, 17) pour les deux directions de propagation ou d'une corrélation croisée (20) de signaux de traitement (18, 19), qui dépendent respectivement de l'un des signaux reçus (16, 17) ou d'un signal partiel du signal reçu (16, 17) respectif, après quoi la grandeur de mesure (24) est déterminée en fonction de la différence de temps de propagation (22), le transducteur ultrasonore d'émission (5, 6) étant commandé respectivement par un signal d'excitation (8, 42), le signal d'excitation (8, 42) présentant d'une part une fréquence porteuse fixe,
**caractérisé en ce que**
le signal d'excitation (8) présente une enveloppe (10) avec plusieurs maxima (11, 12) espacés dans le temps, et **en ce que** d'autre part, lorsqu'une condition de déclenchement (27) est satisfaite, dont la satisfaction dépend de la hauteur (25, 26) d'au moins un maximum secondaire (33) de la corrélation croisée (1), la détermination de la grandeur de mesure (24) est modifiée par rapport à un mode de fonctionnement normal et/ou un message (29) est délivré à un utilisateur du dispositif de mesure (20) et/ou à un dispositif supplémentaire externe au dispositif de mesure.

2. Procédé selon la revendication 1, **caractérisé en ce que**, d'une part, dans le cas où le signal d'excitation (8, 42) présente une fréquence porteuse fixe, le signal d'excitation présente en plus un saut de phase (9) et/ou, **en ce que** d'autre part, dans le cas où, lorsque la condition de déclenchement (27) est satisfaite, la détermination de la grandeur de mesure (24) est modifiée par rapport à un mode de fonctionnement normal et/ou le message (33) est délivré à l'utilisateur du dispositif de mesure (20) et/ou au dispositif supplémentaire externe au dispositif de mesure, la satisfaction de la condition de déclenchement (27) dépend en plus de la hauteur (25, 26) du maximum principal (28) de la corrélation croisée (1).

3. Procédé selon la revendication 1 ou 2, **caractérisé en ce que**, lorsque la condition de déclenchement (27) est satisfaite, la détermination de la grandeur de mesure (22) est modifiée par rapport au mode de fonctionnement normal de telle sorte que, d'une part, les signaux reçus (16, 17) sont rejetés et soit une grandeur de mesure (22) déterminée préalablement est utilisée comme grandeur de mesure actuelle (24), soit la détermination des signaux reçus (16, 17) est répétée en vue de fournir de nouveaux signaux reçus (16, 17), la détermination des nouveaux signaux reçus (16, 17) par rapport à la détermination des signaux reçus (16, 17) étant réalisée soit inchangée, soit avec au moins un paramètre de détermination modifié, et la grandeur de mesure (24) étant déterminée sur la base des nouveaux signaux reçus (16, 17), et/ou **en ce que**, d'autre part, la différence de temps de propagation (22) est déterminée en fonction de la position de l'un des maxima secondaires (29) de la corrélation croisée (20) et/ou une règle de détermination (23) servant à déterminer la grandeur de mesure (24) à partir de la différence de temps de propagation (22) est modifiée.

4. Procédé selon l'une des revendications précédentes, **caractérisé en ce que** lorsque la condition de déclenchement (27) est satisfaite et/ou lorsqu'une condition spectrale (37), qui dépend d'une composition spectrale (35) d'au moins l'un des signaux reçus (16, 17), est satisfaite, une deuxième détermination des signaux reçus (16, 17) a lieu après une première détermination des signaux reçus (16, 17), la fréquence porteuse du signal d'excitation (8, 42) et/ou l'amplitude du saut de phase (9) étant modifiées par rapport à la première détermination.

5. Procédé selon la revendication 4, **caractérisé en ce que** la satisfaction de la condition spectrale (37) dépend des fréquences dont la plage de fréquences (36) présente l'amplitude maximale dans le signal reçu (16, 17) respectif ou dans une portion de temps sélectionnée du signal reçu (16, 17) respectif.

6. Procédé selon l'une des revendications précédentes, **caractérisé en ce que** les signaux reçus (16, 17) sont déterminés plusieurs fois successivement dans le temps pour les directions de propagation et la corrélation croisée (20) respective, une évolution dans le temps de la hauteur (25, 26) du maximum principal (28) et/ou d'au moins l'un des maxima secondaires (29) de la corrélation croisée (20) et/ou une évolution dans le temps d'un résultat de traitement qui dépend des hauteurs (25, 26) du maximum principal (28) et d'au moins l'un des maxima secondaires (29), étant acquise, la satisfaction de la condition de déclenchement (27) dépendant de l'évolution dans le temps respective.

7. Procédé selon l'une des revendications précédentes, **caractérisé en ce qu'**avant l'émission du signal ultrasonore (14, 15) pour au moins l'une des directions de propagation par le transducteur ultrasonore émetteur (5, 6) respectif, un signal ultrasonore de test est émis plusieurs fois et transmis vers le transducteur ultrasonore récepteur (5, 6) respectif par l'intermédiaire du fluide (3), un signal reçu de test (47) respectif étant détecté par l'intermédiaire du transducteur ultrasonore récepteur (5, 6) respectif, le transducteur ultrasonore émetteur (5, 6) respectif étant respectivement commandé par un signal d'excitation de test (44), en particulier modulé en amplitude par l'enveloppe (10), pour l'émission du signal ultrasonore de test respectif, les signaux d'excitation de test (44) se distinguant les uns des autres par leur fréquence porteuse (45) et/ou l'amplitude (46) de leur saut de phase (9), le signal d'excitation de test (44) sélectionné comme signal d'excitation (8, 42) pour la spécification de la différence de temps de propagation (22) étant celui pour lequel, dans le signal reçu de test (47) résultant, sont obtenus le saut de phase maximal (48) et/ou la séparation maximale de maxima locaux d'une enveloppe du signal reçu de test (47).

8. Procédé selon la revendication 7, **caractérisé en ce que** l'amplitude du saut de phase (48) est déterminée en effectuant respectivement une transformée de Fourier pour plusieurs fenêtres du signal reçu de test (47) respectif.

9. Procédé selon l'une des revendications précédentes, **caractérisé en ce que** la satisfaction de la condition de déclenchement (27) dépend de la différence et/ou du quotient de la hauteur (25) du maximum principal (28) et de la hauteur (26) de l'un des maxima secondaires (29), en particulier du maximum secondaire le plus élevé (26).

10. Procédé selon l'une des revendications précédentes, **caractérisé en ce que**, d'une part, la satisfaction de la condition de déclenchement (20) dépend de la hauteur (25, 26) du maximum principal (28) et/ou du maximum secondaire (29) de la corrélation croisée (27) des signaux de traitement (18, 19), le signal de traitement (18, 19) respectif étant déterminé par la normalisation du signal reçu (16, 17) respectif ou d'un signal intermédiaire déterminé à partir du signal reçu (16, 17) et/ou **en ce que**, d'autre part, la hauteur (25, 26) du maximum principal (28) et/ou du maximum secondaire (29) de la corrélation croisée (20) est déterminée après une normalisation de la corrélation croisée (20).

11. Dispositif de mesure destiné à déterminer une grandeur de mesure (24) concernant l'écoulement d'un fluide (3) à travers un tube de mesure (4), comprenant un tube de mesure (4) qui guide le fluide (3), au moins deux transducteurs ultrasonores (5, 6) disposés dans ou sur le tube de mesure (4) et un dispositif de commande (7) qui est conçu pour exciter les transducteurs ultrasonores (5, 6), pour détecter des signaux reçus (16, 17) par l'intermédiaire des transducteurs ultrasonores (5, 6) et pour déterminer la grandeur de mesure (24) en fonction des signaux reçus (16, 17), **caractérisé en ce que** le dispositif de commande (7) est conçu pour mettre en œuvre le procédé selon l'une des revendications précédentes.
